# EUROPÄISCHE PATENTSCHRIFT

(11) **EP 1 727 723 B1**
(45) Veröffentlichungstag und Bekanntmachung des Hinweises auf die Patenterteilung: **21.05.2008**
(21) Anmeldenummer: 05707612.7
(22) Anmeldetag: 24.02.2005
(51) Int. Cl.: B62D 5/04

(54) **ELEKTRISCHE SERVOLENKUNG MIT EINSTELLBAREM GETRIEBESPIEL**
ELECTRIC POWER STEERING WITH AN ADJUSTABLE GEAR CLEARANCE
DIRECTION ASSISTEE ELECTRIQUE COMPRENANT UN JEU DE TRANSMISSION AJUSTABLE

(30) Priorität: 24.03.2004 DE 102004014825
(43) Veröffentlichungstag der Anmeldung: 06.12.2006
(73) Patentinhaber: ThyssenKrupp Presta SteerTec GmbH, 40476 Düsseldorf (DE)
(72) Erfinder: HECK, Hubert, 40629 Düsseldorf (DE); KIFORIUK, Alexander, 73061 Ebersbach an der Fils (DE)
(74) Vertreter: Lenzing, Andreas
(86) Internationale Anmeldenummer: PCT/EP2005/001951
(87) Internationale Veröffentlichungsnummer: WO 2005/095177

(56) Entgegenhaltungen:
- DE-A1- 10 123 619
- DE-B3- 10 234 596

## Beschreibung

Die vorliegende Erfindung betrifft eine elektrische Kraftfahrzeugservolenkung mit den Merkmalen des Oberbegriffs des Anspruchs 1.

Aus der DE 101 23 619 A1 ist eine elektrische Servolenkung mit den Merkmalen des Oberbegriffs des Anspruchs 1 bekannt. Die bekannte Servolenkung weist einen Servomotor auf, der unmittelbar eine Schnecke antreibt. Die Schnecke steht in ständigem Eingriff mit einem Schneckenrad, welches wiederum drehfest mit der Eingangswelle eines Lenkgetriebes verbunden ist. Die Eingangswelle des Lenkgetriebes ist in diesem Fall ein Lenkritzel, welches mit einer Zahnstange kämmt.

Eine weitere bekannte Lenkung ist in der DE 102 34 596 B3 offenbart. Hier treibt ebenfalls ein elektrischer Servomotor direkt eine Schnecke an, die mit einem Schneckenrad kämmt. Das Schneckenrad ist hier auf der Eingangswelle eines Lenkgetriebes befestigt, das als Kugelumlauflenkung ausgebildet ist.

Bei den Lenkungen ist gemeinsam, dass die Motorwelle und damit die Schnecke einerseits und das Schneckenrad und damit die Eingangswelle des eigentlichen Lenkgetriebes in einem gemeinsamen Gehäuse gelagert sind und im rechten Winkel zueinander orientiert sind. Die Lagerung erfolgt in Kugellagern.

Im Betrieb einer solchen Servolenkung kommt es regelmäßig vor, dass bei nahezu kräftefreier Geradeausfahrt die Lenkung um eine Mittellage pendelt. In dieser Stellung treten zwei mögliche Effekte auf, nämlich zum einen eine häufige Drehrichtungsänderung des Elektromotors und zum anderen, wenn die Drehrichtungsänderung des Elektromotors elektronisch bedämpft ist, eine wechselnde Anlage des Schneckenrades an die eine oder andere Zahnflanke der Schnecke.

In beiden Fällen führt ein eventuell vorhandenes geringes Spiel zwischen der Schnecke und dem Schneckenrad zu einer Geräuschentwicklung, die unerwünscht ist.

Ein Spielausgleich zwischen den beiden miteinander kämmenden Elementen ist nicht vorgesehen, da die Lagersitze in dem gemeinsamen Gehäuse die Position der Drehachsen der beiden miteinander kämmenden Elemente genau fixieren. In der Praxis wird deshalb bei den bekannten Servolenkungen eine Klassierung der Schnecke und des Schneckenrades vorgenommen, um einen möglichst spielfreien Eingriff zu gewährleisten. Die Klassierung führt zu einem erheblichen Mehraufwand bei der Fertigung, da die Schnecken in 10-20 Maßklassen sortiert werden müssen. Eine hinreichende Spielfreiheit wird dennoch in vielen Fällen nicht erreicht.

Es ist deshalb Aufgabe der vorliegenden Erfindung, eine Servolenkung mit einem einstellbaren Getriebespiel zwischen der Schnecke des Servomotors und dem Schneckenrad, welches mit der Eingangswelle des Lenkgetriebes verbunden ist, zu schaffen.

Diese Aufgabe wird von einer Lenkung mit den Merkmalen des Anspruchs 1 gelöst.

Weil wenigstens eines der Lager ein Wälzlager mit einem exzentrischen Außenring ist, kann über die Position des Außenrings das Spiel des Eingriffs justiert werden. Vorzugsweise ist dabei das Lager kann ein Rillenkugellager, insbesondere ein Radial-Rillenkugellager.

Der Eingriff der Verzahnung in dem Schneckengetriebe lässt sich besonders genau einstellen, wenn das Lager eine Exzentrizität im Bereich von 10µm bis 200µm aufweist.

Die Einstellung der Lage des Außenrings wird vereinfacht, wenn der Außenring Aussparungen für den Eingriff eines Werkzeugs aufweist, vorzugsweise wenigstens zwei parallel zur Drehachse orientierte Stirnlöcher oder eine Anzahl von Nuten.

Insbesondere kann der Außenring des Lagers einstückig an seiner äußeren Umfangsfläche eine Lagersitzfläche und an seiner inneren Umfangsfläche eine Lauffläche trägt.

Die Einstellung während der Montage wird vereinfacht, wenn das Lager mit exzentrischen Außenring an dem freien Ende der Schnecke angeordnet ist.

Die Einstellung kann nachträglich geändert werden, wenn das Lager in einem Klemmsitz angeordnet ist.

Die Eingangswelle kann eine Lenksäule einer Kraftfahrzeuglenkung sein.

Weiter kann die Eingangswelle eine Lenkspindel einer Kugelumlauflenkung sein.

Besonders vorteilhaft ist es, wenn die Eingangswelle ein Lenkritzel einer Zahnstangenlenkung ist.

Nachfolgend wird ein Ausführungsbeispiel der vorliegenden Erfindung anhand der Zeichnung beschrieben. Es zeigen:
- Fig. 1:: ein Rillenkugellager mit einem exzentrischen Außenring; sowie
- Fig. 2:: ein Getriebe mit einem Elektromotor und einem Schneckentrieb, der mit einem Lager nach Fig. 1 spielfrei eingestellt ist.

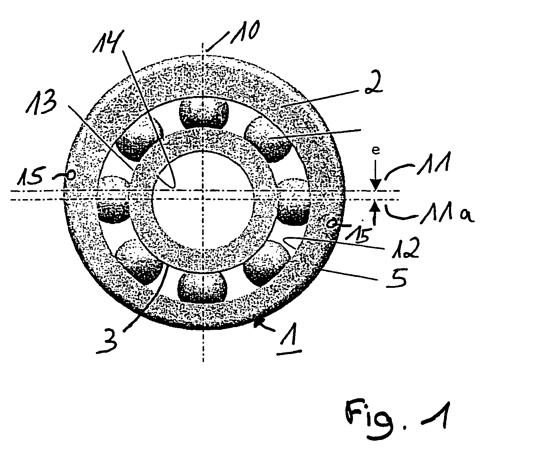

Die Figur 1 zeigt ein Rillenkugellager 1 mit einem Außenring 2 und einem Innenring 3, zwischen denen Lagerkugeln 4 angeordnet sind. Der Außenring 2 weist eine äußere Umfangsfläche 5 auf, die kreisringförmig ausgeführt ist und die rotationssymmetrisch zum Schnittpunkt von zwei Achsen 10 und 11 ist. Weiter weist der Außenring 2 eine innere Umfangsfläche 12 auf, die ebenfalls kreisringförmig ausgeführt ist, jedoch rotationssymmetrisch zum Schnittpunkt der Achsen 10 und 11a. Die äußere Umfangsfläche 5 und die innere Umfangsfläche 12 sind folglich um einen Betrag e, der dem Abstand der beiden erwähnten Schnittpunkte 10,11 bzw. 10,11a entspricht, exzentrisch zueinander.

Die innere Umfangsfläche 12, die über den Umfang gleichmäßig verteilten Kugeln 4, sowie der Innenring 3 mit einer äußeren Lauffläche 13 und einer inneren Umfangsfläche 14 sind ebenfalls rotationssymmetrisch zu dem Schnittpunkt der Achsen 10 und 11a angeordnet, so dass sie ein Radial-Rillenkugellager bilden.

Der Außenring 2 weist weiter zwei Ausnehmungen in Form von Stirnlöchern 15 auf, die einander gegenüberliegend auf der Stirnseite des Außenrings 2 angeordnet sind und die senkrecht zur Zeichenebene als Sackbohrungen in den Außenring 2 eingebracht sind.

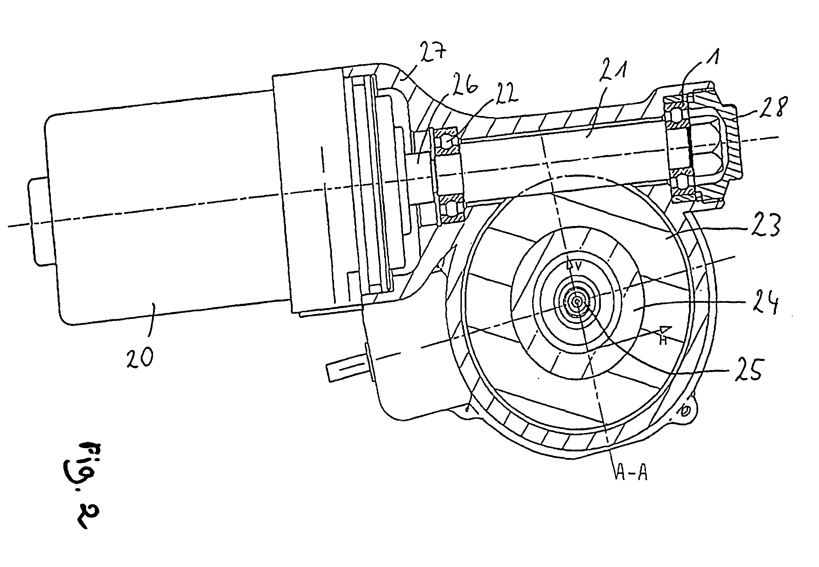

In der Figur 2 ist ein Schneckenradgebtriebe einer elektrischen Kraftfahrzeugservolenkung schematisch dargestellt. Das Schneckenradgetriebe wird von einem Elektromotor 20 angetrieben, dessen Motorwelle 26 eine Schnecke 21 trägt. Die Schnecke 21 ist in einem Getriebegehäuse 27 in einem motorseitigen konventionellen Kugellager 22 und an dem freien Ende der Schnecke 21 in einem Kugellager 1 mit exzentrischem Außenring drehbar gelagert.

Die Schnecke 21 kämmt mit einem Schneckenrad 23, welches auf einer zweiten Welle 25 sitzt, die ebenfalls in dem Getriebegehäuse mit einem Kugellager 24 und einem entsprechenden zweiten Kugellager auf der dem Betrachter abgewandten Seite gelagert ist. Die zweite Welle 25 kann hier ein Lenkritzel einer Zahnstangenlenkung, eine Lenkspindel einer Kugelumlauflenkung oder eine Lenksäule sein.

Bei derartigen Getrieben mit sich kreuzenden und in einem gemeinsamen Gehäuse gelagerten Wellen 25, 26 ist eine Einstellung des Spiels zwischen der Schnecke 21 und dem Schneckenrad 23 bislang nicht möglich. Diese Getriebe werden deshalb durch möglichst passgenaue Selektion der miteinander kämmenden Elemente 21, 23 weitestgehend spielfrei gefertigt. Dazu ist eine Vermessung und Klassifizierung der Schnecke 21 und des Schneckenrades 23 üblich. Dieses Verfahren ist sehr aufwändig und führt nicht immer zu einem vollständig spielfreien Lauf des Eingriffs. Ein spielfreier Lauf ist aber insbesondere bei Getrieben, die häufig die Laufrichtung wechseln, die Ursache von nachteiliger Geräuschentwicklung.

Durch Verwendung des Lagers 1 kann nun im Rahmen der üblichen Fertigungspräzision jede Schnecke 21 mit jedem Schneckenrad 23 in das Getriebe eingesetzt werden. Bei der Montage wird das exzentrische Kugellager 1 in einen speziellen Sitz des Getriebegehäuses 27 eingesetzt, in dem es zum einen von der dem Elektromotor 20 abgewandten Seite (der in Figur 2 rechten Seite) her durch einen Deckel 28 zugänglich ist und zum anderen mit seinem Außenring 2 zunächst noch drehbar sitzt. Zur Einstellung des Spiels des Eingriffs zwischen der Schnecke 21 und dem Schneckenrad 23 kann nun ein Stirnlochschlüssel in die Stirnlöcher 15 eingesetzt werden und der Außenring 2 in dem Sitz des Getriebegehäuses verdreht werden. Diese Drehung bewirkt eine geringe radiale Lageveränderung der Schnecke 21 und wird so lange durchgeführt, bis entweder das gemessene Spiel zwischen der Schnecke 21 und dem Schneckenrad 23 den gewünschten Wert aufweist oder aber bis die durch Drehung der Schnecke 21 zu ermittelnde Reibung in dem Eingriff einen vorbestimmten Wert erreicht, der anzeigt, dass der Eingriff spielfrei ist. In dieser Position wird der Außenring 2 in seinem Sitz fixiert. Dieses Fixieren kann durch eine Klemmung nach Art einer das Lager 1 umschlingenden Schelle erfolgen. Es kann auch vorgesehen sein, dass das Lager 1 mit einem Klebstoff eingesetzt wird, der zunächst für die Zeit des Einstellvorgangs noch flüssig bzw. pastös bleibt und der nach einer angemessenen Zeit aushärtet und so den Lagersitz fixiert. Danach wird das Gehäuse 27 durch den Deckel 28 verschlossen.

Diese besonders genaue spielfreie Einstellung des beschriebenen Schneckenradgetriebes ist durch Verwendung des beschriebenen Lagers 1 erstmals möglich. Die Exzentrizität e des Lagers 1 liegt dabei je nach Baugröße des Getriebes beispielsweise im Bereich zwischen 10µm und 200µm.

## Patentansprüche

1. Elektrische Servolenkung für Kraftfahrzeuge,
- mit einem elektrischen Servomotor (20), der eine auf einer ersten Welle (26) angeordnete Schnecke (21) antreibt,
- mit einem auf einer zweiten Welle (25) angeordneten Schneckenrad (23), welches mit der Schnecke (21) kämmt,
- wobei das Schneckenrad (23) mit einer Eingangswelle eines Lenkgetriebes in Wirkverbindung steht, und
- wobei die erste Welle (26) und die zweite Welle (25) in einem gemeinsamen Getriebegehäuse (27) in Lagern (1, 22, 24) drehbar gelagert sind, **dadurch gekennzeichnet, dass** wenigstens eines der Lager (1, 22, 24) ein Wälzlager (1) mit einem exzentrischen Außenring (2) ist.

2. Servolenkung nach Anspruch 1, **dadurch gekennzeichnet, dass** das wenigstens eine Lager (1) ein Rillenkugellager ist.

3. Servolenkung nach Anspruch 1, **dadurch gekennzeichnet, dass** das wenigstens eine Lager (1) ein Radial-Rillenkugellager ist.

4. Servolenkung nach einem der vorhergehenden Ansprüche, **dadurch gekennzeichnet, dass** der Außenring (2) einstückig an seiner äußeren Umfangsfläche (5) eine Lagersitzfläche und an seiner inneren Umfangsfläche (12) eine Lauffläche trägt.

5. Servolenkung nach einem der vorhergehenden Ansprüche, **dadurch gekennzeichnet, dass** die Exzentrizität (e) des wenigstens einen Lagers (1) im Bereich von 10µm bis 200µm liegt.

6. Servolenkung nach einem der vorhergehenden Ansprüche, **dadurch gekennzeichnet, dass** der Außenring (2) Aussparungen (15) für den Eingriff eines Werkzeugs aufweist.

7. Servolenkung nach Anspruch 6, **dadurch gekennzeichnet, dass** der Außenring (2) wenigstens zwei parallel zur Drehachse orientierte Stirnlöcher (15) aufweist.

8. Servolenkung nach einem der vorhergehenden Ansprüche, **dadurch gekennzeichnet, dass** Lager (1) mit exzentrischen Außenring (2) an dem freien Ende der Schnecke (21) angeordnet ist.

9. Servolenkung nach einem der vorhergehenden Ansprüche, **dadurch gekennzeichnet, dass** das Lager (1) in einem Klemmsitz angeordnet ist.

10. Servolenkung nach einem der vorhergehenden Ansprüche, **dadurch gekennzeichnet, dass** die Eingangswelle (25) eine Lenksäule einer Kraftfahrzeuglenkung ist.

11. Servolenkung nach einem der vorhergehenden Ansprüche, **dadurch gekennzeichnet, dass** die Eingangswelle (25) eine Lenkspindel einer Kugelumlauflenkung ist.

12. Servolenkung nach einem der vorhergehenden Ansprüche, **dadurch gekennzeichnet, dass** die Eingangswelle (25) ein Lenkritzel einer Zahnstangenlenkung ist.

## Claims

1. Electrical power steering system for motor vehicles,
- with an electrical servomotor (20), which drives a worm element (21) arranged on a first shaft (26),
- with a worm wheel (23) arranged on a second shaft (25), which meshes with the worm element (21),
- wherein the worm wheel (23) is in operational connection with an input shaft of a steering gear, and
- wherein the first shaft (26) and the second shaft (25) are rotatably mounted in a common gear housing (27) on bearings (1, 22, 24), **characterised in that** at least one of the bearings (1, 22, 24) is a rolling bearing (1) with an eccentric outer ring (2).

2. Power steering system according to Claim 1, **characterised in that** the minimum of one bearing (1) is a grooved ball bearing.

3. Power steering system according to Claim 1, **characterised in that** the minimum of one bearing (1) is a radial grooved ball bearing.

4. Power steering system according to any one of the preceding claims, **characterised in that** the outer ring (2) integrally carries on its outer circumferential surface (5) a bearing mounting surface and on its inner circumferential surface (12) a running surface.

5. Power steering system according to any one of the preceding claims, **characterised in that** the eccentricity (e) of the minimum of one bearing (1) lies in the range from 10 µm to 200 µm.

6. Power steering system according to any one of the preceding claims, **characterised in that** the outer ring (2) has cut-outs (15) for engagement of a tool.

7. Power steering system according to Claim 6, **characterised in that** the outer ring (2) has at least two face holes (15) oriented parallel to the axis of rotation.

8. Power steering system according to any one of the preceding claims, **characterised in that** a bearing (1) with an eccentric outer ring (2) is arranged at the free end of the worm element (21).

9. Power steering system according to any one of the preceding claims, **characterised in that** the bearing (1) is arranged in a clamping mount.

10. Power steering system according to any one of the preceding claims, **characterised in that** the input shaft (25) is a steering column of a motor vehicle steering system.

11. Power steering system according to any one of the preceding claims, **characterised in that** the input shaft (25) is a steering spindle of a recirculating ball-type steering system.

12. Power steering system according to any one of the preceding claims, **characterised in that** the input shaft (25) is a steering pinion of a rack and pinion steering system.

## Revendications

1. Direction assistée électrique pour véhicules,
- comportant un servomoteur électrique (20), qui entraîne une vis sans fin (21) associée à un premier arbre (26),
- comportant une roue hélicoïdale (23) associée à un second arbre (25), roue hélicoïdale qui engrène avec la vis sans fin (21),
- dans lequel la roue hélicoïdale (23) se trouve en interaction avec un arbre d'entrée d'un mécanisme de direction, et
- dans lequel le premier arbre (26) et le second arbre (25) sont montés rotatifs dans des paliers (1, 22, 24) dans un carter (27), **caractérisée en ce qu'**au moins un des paliers (1, 22, 24) est un palier à roulement (1) avec un anneau extérieur excentrique (2).

2. Direction assistée selon la revendication 1, **caractérisée en ce qu'**au moins un palier (1) est un roulement à billes rainuré.

3. Direction assistée selon la revendication 1, **caractérisée en ce qu'**au moins un palier (1) est un roulement à billes rainuré radial.

4. Direction assistée selon l'une des revendications précédentes, **caractérisée en ce que** l'anneau extérieur (2) supporte d'un seul tenant sur sa surface circonférentielle extérieure (5) une surface d'appui et sur sa surface circonférentielle intérieure (12) une surface de roulement.

5. Direction assistée selon l'une des revendications précédentes, **caractérisée en ce que** l'excentricité (e) d'au moins un palier (1) est comprise dans une plage allant de 10 µm à 200 µm.

6. Direction assistée selon l'une des revendications précédentes, **caractérisée en ce que** l'anneau extérieur (2) présente des évidements (15) pour la prise d'un outil.

7. Direction assistée selon la revendication 6, **caractérisée en ce que** l'anneau extérieur (2) présente au moins deux trous antérieurs (15) parallèles à l'axe de rotation.

8. Direction assistée selon l'une des revendications précédentes, **caractérisée en ce que** le palier (1) avec l'anneau extérieur excentrique (2) est associé à la vis sans fin (21) à son extrémité libre.

9. Direction assistée selon l'une des revendications précédentes, **caractérisée en ce que** le palier (1) est disposé dans un siège de serrage.

10. Direction assistée selon l'une des revendications précédentes, **caractérisée en ce que** l'arbre d'entrée (25) est une colonne de direction de la direction d'un véhicule.

11. Direction assistée selon l'une des revendications précédentes, **caractérisée en ce que** l'arbre d'entrée (25) est un arbre de direction d'une direction à recirculation de billes.

12. Direction assistée selon l'une des revendications précédentes, **caractérisée en ce que** l'arbre d'entrée (25) est un pignon de direction d'une direction à crémaillère.
